(19) Europäisches Patentamt

European Patent Office

Office européen des brevets

(11) **EP 3 484 153 A1**

(12) **EUROPEAN PATENT APPLICATION**

(43) Date of publication:
15.05.2019 Bulletin 2019/20

(21) Application number: 18205771.1

(22) Date of filing: 12.11.2018

(51) Int Cl.:
$H04N\ 19/30^{(2014.01)}$  $H04N\ 19/136^{(2014.01)}$
$G06T\ 3/40^{(2006.01)}$  $H04N\ 21/2343^{(2011.01)}$

| (84) Designated Contracting States:<br>AL AT BE BG CH CY CZ DE DK EE ES FI FR GB<br>GR HR HU IE IS IT LI LT LU LV MC MK MT NL NO<br>PL PT RO RS SE SI SK SM TR<br>Designated Extension States:<br>BA ME<br>Designated Validation States:<br>KH MA MD TN<br><br>(30) Priority: 13.11.2017 EP 17201301<br><br>(71) Applicant: Continental Automotive GmbH<br>30165 Hannover (DE) | (72) Inventors:<br>• Asvatha Narayanan, Vishnu Vardhana<br>560037 Weilimdorf / Stuttgart (DE)<br>• Chokkarapu, Anil<br>506001 Hanamkonda, Warngal (IN)<br>• Gomathinayagam, Murugan<br>560068 BTM Layout I Stage (IN)<br><br>(74) Representative: Reuter, Andreas<br>Conti Temic microelectronic GmbH<br>Intellectual Property<br>Sieboldstraße 19<br>90411 Nürnberg (DE) |
| --- | --- |

(54) **DEVICE AND METHOD FOR RAW IMAGE DATA COMPRESSION BASED ON UNCERTAINTY MEASURE**

(57) The present invention relates to a device (100) for raw image data compression for a vehicle based on uncertainty measure, the device (100) comprising: a data rearranging module (10), a data splitting module (20), and an encoding module (30).

Fig. 2

EP 3 484 153 A1

## Description

FIELD OF THE INVENTION

The present invention relates to the field of data compression based on uncertainty measure. Particularly, the present invention relates to a device for raw image data compression based on uncertainty measure, a corresponding method as well as a corresponding data structure format.

BACKGROUND OF THE INVENTION

The camera captures data in form of image or video data in RAW format (GBRG or GRBG or BGGR or RGGB). The captured RAW image or video data has a certain level of redundancy with regard to its information content. With elimination of redundancy, or at least reduction of the level of redundancy, the storage space for data retention as well bandwidth requirements for data transmission both reduces.

The standard compression techniques provide solutions only for certain color formats such as RGB or YUV formats, for example YUV420, YUV422, YUV444, and not for raw data formats like Bayer-Pattern images.

Even the chip vendor's hardware units supported YUV420 format and other data formats are generally not supported by chip-based data compression systems.

Camera sensor acquisition unit continuously capture scenes in form of image or video data in raw format in either GRBG or RGGB or GBGR with any of the bit depth available 8, 10, 12 and 14.

Currently, none of the chip manufactures provide hardware encoder/decoder support of 12-bit-depth data (maximum is 10-bit-support in limited use cases, but 8-bit is the most common format supported) captured by camera sensor acquisition unit.

Automotive cameras capture sequences of images in 4K resolution, e.g. more than 8MP (Mega Pixels), whose visual experience is ultimate as well fine spatial detail is resolved well and it's a newly-emerging resolution standard for Ultra HD.

The information for all those pixels can consume lot of bandwidth and storage space. The software and hardware for encoding and decoding commercial for 4K data will emerge into market.

Thus, there is high need of compressing data i.e. removing redundant data which gains storage space constraints as well transmitting image data.

However, no compression algorithm is available for compressing the Bayer-Pattern, automotive image recognition and processing system need to perform preprocessing to utilize standard codec's for compressing or encoding the data.

SUMMARY OF THE INVENTION

There may be a need to improve pixel-bit depth support for entropy based raw data compression for a vehicle.

These needs are met by the subject-matter of the independent claims. Further exemplary embodiments are evident from the dependent claims and the following description.

An aspect of the present invention relates to a device for entropy based raw image data compression for a vehicle, the device comprising, a data rearranging module, a data splitting module, and an encoding module. In other words, instead of referring to entropy based raw image data compression, the device for raw image data compression is based on uncertainty measure.

The data rearranging module is configured to rearrange a 12-bit depth pattern input data into a 12-bit depth pattern rearranged data of YUV420 format comprising

    i) at least one Y-channel containing green, red and blue components of the 12-bit depth pattern input data and,
    ii) at least one U-channel and at least one V-channel containing at least one blank image filled with zeros;
    iii) wherein a resolution of the at least one Y-channel corresponds to a resolution of the 12-bit depth pattern input data.

The data splitting module function is to split the 12-bit depth pattern rearranged data into a n-bit depth pattern least significant bits, LSB, data and a m-bit depth pattern most significant bits, MSB, data.

The data splitting module is configured to split the 12-bit depth pattern rearranged data into a n-bit depth pattern least significant bits, LSB, data and a (12-n)-bit depth pattern most significant bits, MSB, data, wherein the n-bit depth pattern LSB data comprises lowest n-bit of the 12-bit depth pattern rearranged data, wherein the (12-n)-bit depth pattern MSB data comprises highest (12-n)-bit of the 12-bit depth pattern rearranged data, wherein n is either 4 or 6 or 8 or 10.

The encoding module is configured to determine an entropy value of the 12-bit depth pattern input data and to encode the n-bit depth pattern MSB data, if the determined entropy value is higher than an entropy threshold value.

The device for raw image data compression based on uncertainty measure for a vehicle recommends a unique solution for the splitting of the 12-bit-depth data into n-bit-depth and selecting appropriate n-bit-depth data for encoding based on entropy measure.

In other words, the method and the device provides splitting of 12-bit-depth pixel data to n-bit-depth image data and providing an arrangement and encoding of n-bit-depth image data based on entropy.

The device for entropy based raw image data compression for a vehicle seeks an idea to utilize available hardware units in the market without any further focusing on manufacturing new hardware units to support higher bit depth as well for different chromo sampling format in compressing data.

A further, second aspect of the present invention relates to a method for raw image data compression based on uncertainty measure for a vehicle, the method comprising the following steps of:

Rearranging a 12-bit depth pattern input data into a 12-bit depth pattern rearranged data by means of a data rearranging module, the 12-bit depth pattern rearranged data comprising

i) at least one Y-channel containing green, red and blue components of the 12-bit depth pattern input data and,

ii) at least one U-channel and at least one V-channel both containing at least one blank image filled with zeros;

iii) wherein a resolution of the at least one Y-channel corresponds to a resolution of the 12-bit depth pattern input data.

As a further, second step, the method comprises: Splitting module function is to split the 12-bit depth pattern rearranged data into a n-bit depth pattern least significant bits, LSB, data and a n-bit depth pattern most significant bits, MSB, data. The step may further comprise splitting the 12-bit depth pattern rearranged data into a n-bit depth pattern least significant bits, LSB, data and a (12-n)-bit depth pattern most significant bits, MSB, data by means of a data splitting module. The n-bit depth pattern LSB data comprises lowest n-bit of the 12-bit depth pattern rearranged data, wherein the (12-n)-bit depth pattern MSB data comprises highest (12-n)-bit of the 12-bit depth pattern rearranged data, wherein n is either 4 or 6 or 8 or 10.

As a third step of the method, determining of an entropy value of the 12-bit depth pattern input data and encoding the n-bit depth pattern of combined MSB and LSB data is performed, if the determined entropy value is lower than an entropy threshold value.

According to an exemplary embodiment of the present invention, the encoding module is configured to encode the combined MSB and LSB data stream of n-bit if the determined entropy value is lower than or equal to an entropy threshold value.

According to an exemplary embodiment of the present invention, the encoding module is configured to determine the entropy value of the 12-bit depth pattern input data by determining a statistical measure of randomness of a texture of the 12-bit depth pattern input data. The entropy or average information of an image can preferably be determined approximately from the histogram of the image. The histogram shows the different grey level probabilities in the image.

According to an exemplary embodiment of the present invention, the encoding module (30) is configured to determine the entropy value of the 12-bit depth pattern input data based on: - sum (p*log(p)),

where p contains the normalized histogram counts computed from the histogram of the image.

According to an exemplary embodiment of the present invention, the encoding module is configured to determine the entropy value of the 12-bit depth pattern input data based on determining a correlation level between adjacent pixels of the 12-bit depth pattern input data.

According to an exemplary embodiment of the present invention, the encoding module is configured to determine the entropy value of the 12-bit depth pattern input data based on determining a contrast correlation level between adjacent pixels of the 12-bit depth pattern input data.

According to an exemplary embodiment of the present invention, the device is configured to support HEVC video codec standard.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

The methods, systems, and devices described herein may be implemented as software in a Digital Signal Processor, DSP, in a micro-controller or in any other side-processor or as a hardware circuit within an application specific integrated circuit, ASIC, CPLD or FPGA.

The present invention can be implemented in digital electronic circuitry or in computer hardware, firmware, software, or in combinations thereof, for instance in available hardware of conventional medical imaging devices or in new hardware dedicated for processing the methods described herein.

BRIEF DESCRIPTION OF THE DRAWINGS

A more complete appreciation of the invention and the attendant advantages thereof will be clearly understood by reference to the following schematic drawings, which are not to scale, wherein:

Fig. 1    shows a schematic flowchart diagram for a method for raw image data compression based on uncertainty measure for a vehicle according to an exemplary embodiment of the present invention;

Fig. 2    shows a schematic diagram for a device for raw image data compression based on uncertainty measure for a vehicle according to an exemplary embodiment of the present invention;

Fig. 3    shows a schematic diagram of a Bayer-Pattern format captures by a camera according to an exemplary embodiment of the present invention;

Fig. 4　shows a schematic diagram of a rearrangement of Bayer to YUV420 chromo sampling with 12-bit-depth according to an exemplary embodiment of the present invention;

Fig. 5　shows an example in terms of a MSB portion (8-bit) of 12-bit-depth data in YUV420 format according to an exemplary embodiment of the present invention;

Fig. 6　shows a schematic diagram of a LSB portion (8-bit) of 12-bit-depth data in YUV420

Fig. 7　format according to an exemplary embodiment of the present invention; shows a schematic diagram of a combined portion (MSB & LSB) of 12-bit-depth data in YUV420 format according to an exemplary embodiment of the present invention;

Fig. 8　shows a schematic diagram of an approach-1 splitting of 12-bit depth to 8-bit depth image data according to an exemplary embodiment of the present invention;

Fig. 9　shows a schematic diagram of an approach-2 splitting of 12-bit depth to 8-bit depth image data according to an exemplary embodiment of the present invention;

Fig. 10　shows a schematic diagram of an approach-3 splitting of 12-bit depth to 8-bit depth image data according to an exemplary embodiment of the present invention;

Fig. 11　shows a schematic diagram of an 8MP (4K resolution) image with lower entropy of 2.750 (Low Contrast) according to an exemplary embodiment of the present invention;

Fig. 12　shows a schematic diagram of an 8MP (4K resolution) image with higher entropy of 3.500 (High Contrast) according to an exemplary embodiment of the present invention;

Fig. 13　shows a schematic diagram of encoding results for different splitting approaches according to an exemplary embodiment of the present invention; and

Fig. 14　shows a schematic diagram of encoding results w.r.t. high & low entropy variations in image sequence according to an exemplary embodiment of the present invention.

DETAILED DESCRIPTION OF EMBODIMENTS

The illustration in the drawings is purely schematic and does not intend to provide scaling relations or size information. In different drawings, similar or identical elements are provided with the same reference numerals.

Generally, identical parts, units, entities or steps are provided with the same reference symbols in the description.

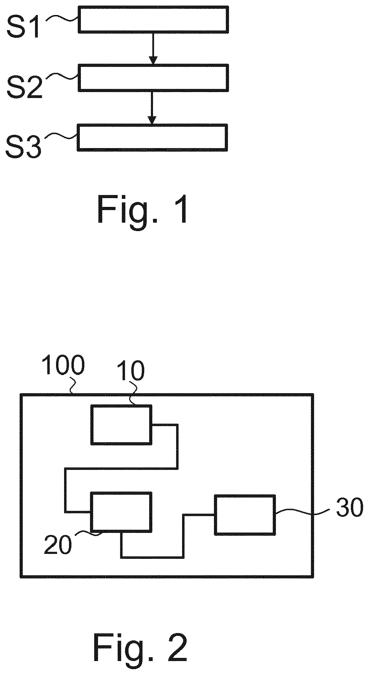

Fig. 1 shows a schematic flowchart diagram for a method for raw image data compression based on uncertainty measure for a vehicle according to an exemplary embodiment of the present invention.

The method for raw image data compression based on uncertainty measure for a vehicle comprises the following steps:

As a first step of the method, rearranging S1 a 12-bit depth pattern input data into a 12-bit depth pattern rearranged data by means of a data rearranging module 10 is performed.

The 12-bit depth pattern rearranged data of YUV420 format comprises:

　　i) at least one Y-channel containing green, red and blue components of the 12-bit depth pattern input data; and

　　ii) at least one U-channel and at least one V-channel both containing at least one blank image filled with zeros;

wherein a resolution of the at least one Y-channel corresponds to a resolution of the 12-bit depth pattern input data.

As a second step of the method, splitting S2 the 12-bit depth pattern rearranged data into a n-bit depth pattern least significant bits, LSB, data and a n-bit depth pattern most significant bits, MSB, data. This step is performed by means of a data splitting module 20, wherein the n-bit depth pattern LSB data comprises lowest n-bit of the 12-bit depth pattern rearranged data, wherein the (12-n)-bit depth pattern MSB data comprises highest (12-n)-bit of the 12-bit depth pattern rearranged data, wherein n is either 4 or 6 or 8 or 10

As a third step of the method, determining S3 a entropy value of the 12-bit depth pattern input data and encoding the n-bit depth pattern MSB data may be performed, if the determined entropy value is higher than an entropy threshold value. The combined MSB and LSB data stream of n-bit data is encoded, when determined entropy value is lesser than an entropy threshold value.

The present invention may for instance be applied in video broadcasting, V2X communication, e.g. vehicle to anything communication, or for infotainment application of a vehicle.

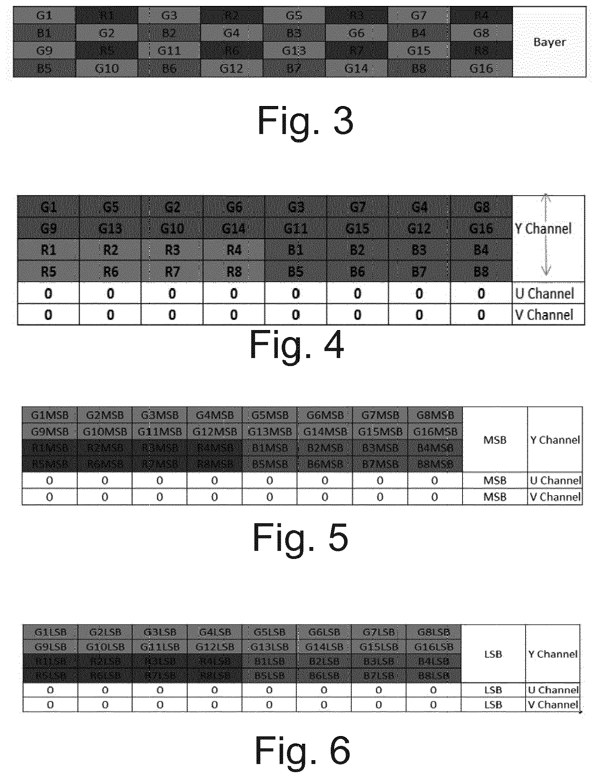

The present invention provides that a camera captures data such as in Bayer-Pattern with GRBG pattern of 12-bit depth as shown in Fig 3.

In order to compress data using standard CODEC's, for instance HEVC/H.264 etc., the encoder and decoder hence has to expects input data either in any of the YUV chromo sampling formats such as 4:2:0 or 4:2:2 or 4:4:4 with 8 or 10 or 12-bit depth.

However, most of the hardware chips are available in market are configured with codec's supporting chromo sampling format of YUV420 with 8bit depth. Thus, the challenge is to rearrange the captured Bayer-Pattern data into YUV420 format with 8 or 10 bit depth.

The present invention addresses this challenge with unique and smart data rearrangement procedure as described in following steps,

1) Rearranging the GRBG, 12-bit depth pattern data in the manner of YUV420 format (as shown in Fig. 4) in such a way that

(a) Y Channel contains all green, red and blue components and,
(b) U & V Channel contains blank image filled with zeros as shown in Fig. 4.
(c) wherein a resolution of the at least one Y-channel corresponds to a resolution of the 12-bit depth pattern input data, and U and V channel corresponds to a quarter resolution of 12-bit depth pattern of Fig. 5.

2) Subsequently splitting YUV420 of the 12- bit depth data into following two components,

(a) n-bit depth pattern least significant bits, LSB, data
(b) n-bit depth pattern most significant bits, MSB, data. Wherein for the instance we split 12-bit depth pattern rearranged data as, 8-bit depth pattern LSB data comprises lowest 8-bit of the 12-bit depth pattern rearranged data, wherein the 8-bit depth pattern MSB data comprises higher 4-bits of the 12-bit depth pattern rearranged data in lower 4-bits of MSB data and higher 4-bits is filled with zeros. Data can also be split as, the LSB data comprise of lower 4 or 6 bits and MSB data comprise of higher 8 or 6 bits from 12-bit rearranged data.

Note that the mentioned steps can be extended further for other patterns and the same arrangement can be adopted for the best results.
Fig. 2 shows a schematic diagram for a device for raw image data compression based on entropy levels for a vehicle according to an exemplary embodiment of the present invention.
A device 100 for raw image data compression for a vehicle is shown in Fig. 2, the device 100 comprises a data rearranging module 10 and a data splitting module 20 as well as an encoding module 30.
The data rearranging module 10 is configured to rearrange a 12-bit depth pattern input data into a 12-bit depth pattern rearranged data of YUV420 format comprising:

i) At least one Y-channel containing green, red and blue components of the 12-bit depth pattern input data and,
ii) At least one U-channel and at least one V-channel containing at least one blank image filled with zeros;
iii) Wherein a resolution of the at least one Y-channel corresponds to a resolution of the 12-bit depth pattern input data, and U and V channel corresponds to a quarter resolution of 12-bit depth pattern.

The data splitting module 20 is configured to into a n-bit depth pattern least significant bits, LSB, data and a (12-n)-bit depth pattern most significant bits, MSB, data, wherein the n-bit depth pattern LSB data comprises lowest n-bit of the 12-bit depth pattern rearranged data, wherein the (12-n)-bit depth pattern MSB data comprises highest (12-n)-bit of the 12-bit depth pattern rearranged data, wherein n is either 4 or 6 or 8 or 10.
The encoding module 30 is configured to determine an entropy value of the 12-bit depth pattern input data and to encode the n-bit depth pattern MSB data stream alone and LSB data stream is tightly packed in 8-bit container, if the determined entropy value is higher than an entropy threshold value.
According to an exemplary embodiment of the present invention the encoding module 30 is also configured to encode the combined MSB and LSB n-bit data stream when determined entropy value is lower than an entropy threshold value.
Fig. 3 shows a schematic diagram of a Bayer-Pattern format captures by a camera according to an exemplary embodiment of the present invention.
A camera records images or video data in Bayer-Pattern with GRBG pattern of 12-bit depth as shown in Fig. 3.
According to an exemplary embodiment of the present invention, the camera captures images of Bayer-Pattern with 12-bit-depth as shown in Fig. 3, according to an exemplary embodiment of the present invention this captured image is rearranged into YUV420 chromo format as shown in Fig. 3, with following constraints

i) Y Channel contains all green, red and blue components.
ii) U and V Channel contains blank image filled with zeros.

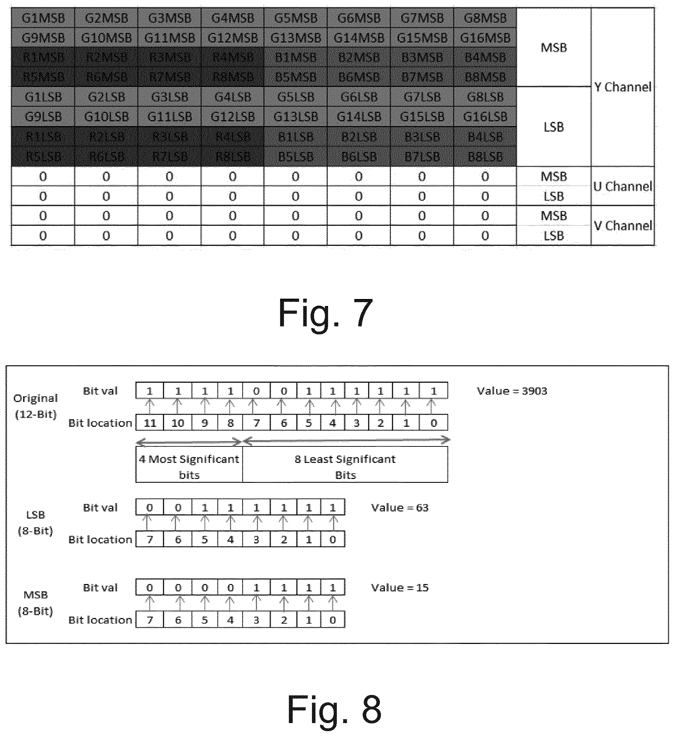

Fig. 4 shows a schematic diagram of a rearrangement of Bayer to YUV420 chromo sampling with 12-bit-depth according to an exemplary embodiment of the present invention.
For analysis, we considered only two 8-bit split only. From Fig. 4, we split 12-bit data into two 8-bits data portions of MSB and LSB as shown in Fig. 5 and Fig. 6 respectively, with any of three approaches according to an exemplary embodiment of the present invention.
Fig. 5 shows an example in terms of a MSB portion (8-bit) of 12-bit-depth data in YUV420 format according to an exemplary embodiment of the present invention.
In general, MSB part contains more correlated information whereas LSB part has almost no correlation information. Now consider for instance a pixel value of 3903 this is of 12-bit data, when we split 12-bit into two eight bits using any of the three approaches then MSB and LSB values are different for each and every approach as shown in Fig. 8, Fig. 9 and Fig. 10.

Fig. 6 shows a schematic diagram of a LSB portion (8-bit) of 12-bit-depth data in YUV420 format according to an exemplary embodiment of the present invention.

Fig. 7 shows a schematic diagram of a combined portion (MSB & LSB) of 12-bit-depth data in YUV420 format according to an exemplary embodiment of the present invention.

Fig. 8 shows a schematic diagram of an approach-1 splitting of 12-bit depth to 8-bit depth image data according to an exemplary embodiment of the present invention.

Approach-1, approach-2, and approach-3 are approaches corresponding to exemplary embodiments of the present invention, which however can be combined to any partial extend.

According to an exemplary embodiment of the present invention, for raw image data compression based on uncertainty measure for a vehicle splitting the 12-bit-depth data into two 8-bit registers is performed,

This results for the LSB portion into the following situation: By considering 8 bits as the least significant bits of 12-bit data, to form 8-bit register. Here, an 8-bit register (LSB) is full. Thus, there is no possibility to pack with adjacent pixels bits.

This results for MSB portion into the following situation: By considering 4 bits, e.g. the 4 most significant bits of 12-bit data and subsequently appending first four bits with zeros to finally form 8-bit register.

According to an exemplary embodiment of the present invention, the split information is represented in Fig. 8.

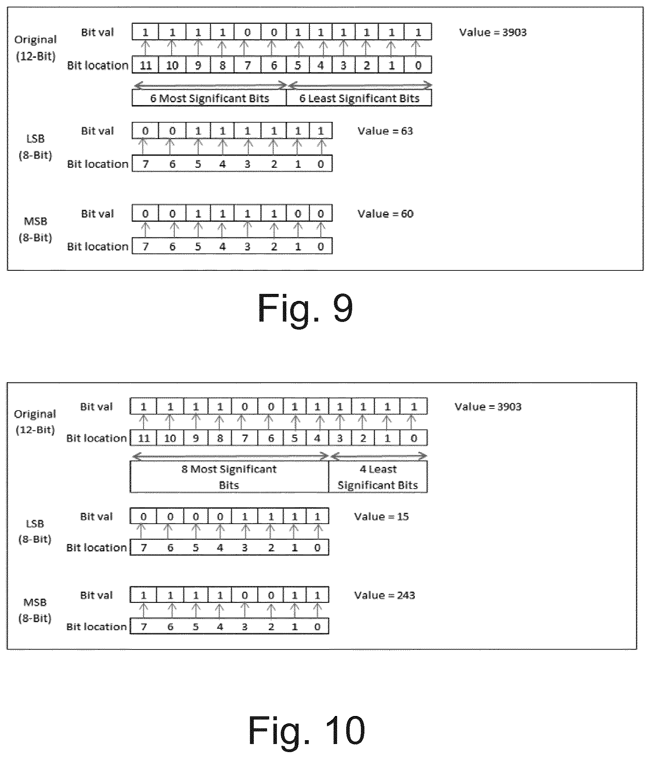

Fig. 9 shows a schematic diagram of an approach of splitting of 12-bit depth to 8-bit depth image data according to an exemplary embodiment of the present invention, referred to as approach-2.

According to an exemplary embodiment of the present invention, for raw image data compression based on uncertainty measure for a vehicle splitting the 12-bit-depth data into two 8-bit registers is performed.

Thereby, the following is defined for the LSB portion: By considering 6 least significant bits of 12-bit and will pack remaining 2 bits with adjacent pixel least significant bits to form 8-bit register.

Thereby the following is defined for the MSB portion: By considering 6 bits in terms of 6 most significant bits of 12-bit word and by appending further first two bits with zeros to form a 8-bit register.

According to an exemplary embodiment of the present invention, the split information is represented in Fig. 9.

Fig. 10 shows a schematic diagram of an approach-3 splitting of 12-bit depth to 8-bit depth image data according to an exemplary embodiment of the present invention.

According to an exemplary embodiment of the present invention, for raw image data compression based on uncertainty measure for a vehicle splitting the 12-bit-depth data into two 8-bit registers is performed.

Thereby the following is defined for the LSB portion: By considering 4 bits in terms of 4 least significant bits of 12-bit and by packing remaining 4 bits with adjacent pixel least significant bits to form an 8-bit register. Data will be packed next to each other depending on the availability of the bit register. If there are remaining bits, then it will be moved to next register and then stored. The LSB portion packing is done with respect to each color component.

Thereby, the following is defined for the MSB portion: By considering 8 bits in terms of the 8 most significant bits of 12-bit.

According to an exemplary embodiment of the present invention, the split information is represented in Fig. 10.

According to an exemplary embodiment of the present invention, an approach of deciding the encoding process based entropy value is provided.

Uncertainty in the image data persists due to camera settings such as exposure parameters (aperture, shutter speed and sensitivity) or contrast level. Thus, one needs to measure this uncertainty.

After camera setting and calibration, the entropy value can be determined to choose combined MSB and LSB streams or MSB only stream for the encoding process.

According to an exemplary embodiment of the present invention, one can measure this uncertainty or randomness of image using entropy; Entropy is a statistical measure of randomness that can be used to characterize the texture of the input image.

Image entropy is a quantity which is used to describe the amount of information which must be coded by a compression algorithm. Entropy can be defined as,

$$-\text{sum } (p*\log(p)),$$

where p contains the normalized histogram counts computed from the histogram of the image.

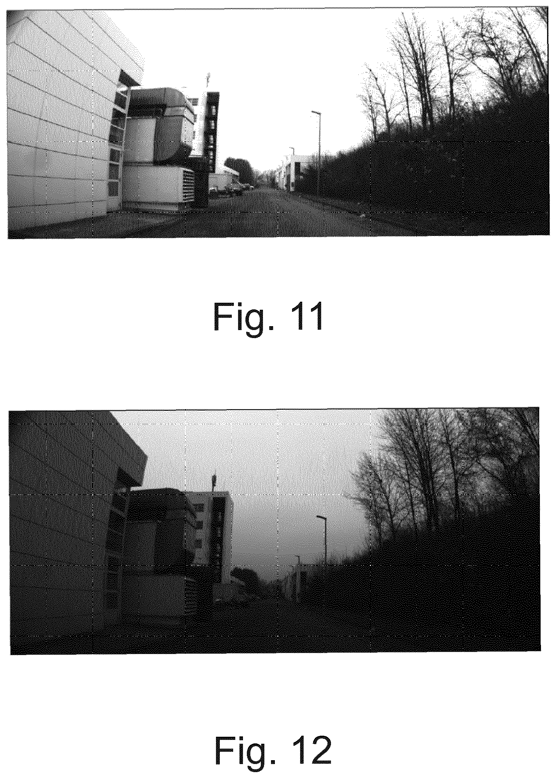

Fig. 11 shows a schematic diagram of an 8MP (4K resolution) image with lower entropy of 2.750 (Low Contrast) according to an exemplary embodiment of the present invention.

According to an exemplary embodiment of the present invention, the Image sequence of low entropy, exhibit high correlation between the neighborhood pixels and which are of low contrast shown in Fig. 11.

According to an exemplary embodiment of the present invention, the Image sequence of high entropy, exhibit very less correlation between the neighborhood and which are of high contrast as shown in Fig. 12.

Fig. 12 shows a schematic diagram of an 8MP (4K resolution) image with higher entropy of 3.500 (High Contrast) according to an exemplary embodiment of the present invention.

When entropy is high, for instance > 3.000, then the device is configured to consider only MSB stream (shown in Fig. 5) channel for encoding process by keeping LSB portion into packed 8bit container, so that more amount of data can be compressed (lossless) as well as it is possible to maintain the real time encoding performance when compared to combined stream.

When entropy is low, for instance < 3.0000, then the device is configured to consider combined stream - MSB and LSB shown in Fig. 7 - channel for encoding process then only more amount of data can be compressed (lossless) still it meets real time encoding performance when compared encoding MSB stream alone.

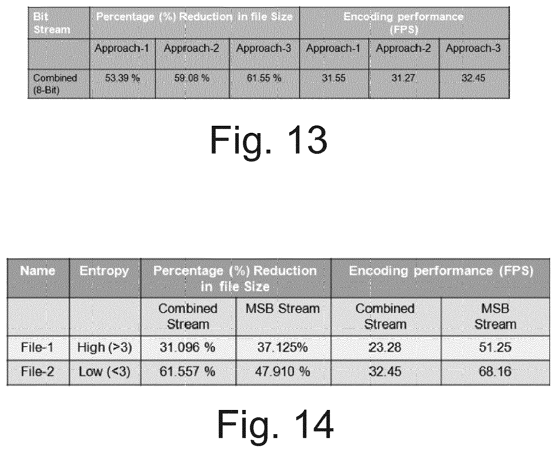

Fig. 13 shows a schematic diagram of encoding results for different splitting approaches according to an exemplary embodiment of the present invention.

Experimental results were used to evaluate and validate the idea of the present invention, standard HEVC codec algorithm were applied by using hardware accelerator of Nvidia Titan X GPU card.

To evaluate the best approach among the three splitting approaches, 4K resolution image sequence capture was considered in urban kind of environment as shown in Fig. 11.

Evaluation of approaches are done on basis of two constraints (parameters) as stated below,

(1) Percentage (%) reduction in file size (states how much file has been compressed).
(2) Encoding computational performance (FPS).

The results are tabulated in Fig. 13, from the results it is concluded that approach-3 gives better compression (lossless) in terms of "Percentage in reduction of file size" as well "encoding performance (FPS)" when compared to other two approaches.

Fig. 14 shows a schematic diagram of encoding results with regard to high and low entropy variations in image sequence according to an exemplary embodiment of the present invention.

To channelize streams for improving the compression gain as well as the encoding performance, a theoretical base was implemented to obtain uncertainty in the image sequence, hence entropy was computed. The entropy value can be used to choose combined MSB and LSB streams as shown in Fig. 7 or MSB stream alone as shown in Fig. 5 for the encoding process.

When entropy is high (> 3.000) i.e. File-1 shown in Fig. 14, one needs to consider only MSB stream only for encoding process by keeping LSB portion into packed 8bit container, so that more amount of data can be compressed (lossless) as well as maintain the real time encoding performance when compared to combined stream.

When entropy is low (< 3.0000) i.e. File-2 shown in Fig. 14, then one needs to consider combined stream (MSB&LSB) for encoding process then only more amount of data is compressed (lossless) still it meets real time encoding performance when compared to MSB stream alone.

For the case that a Bayer image sequence is provided with higher - e.g. above a threshold level - entropy, then it is suitable to encode only the 8bit MSB portion of YUV420 stream by keeping LSB portion into packed 8bit container.

For the case that a Bayer image sequence is provided with lower - e.g. below or equal to a threshold level - entropy, then it is suitable to encode combined (MSB and LSB portion) YUV420 stream.

It has to be noted that embodiments of the present invention are described with reference to different subject-matters. In particular, some embodiments are described with reference to method type claims, whereas other embodiments are described with reference to the device type claims.

However, a person skilled in the art will gather from the above and the foregoing description that, unless otherwise notified, in addition to any combination of features belonging to one type of the subject-matter also any combination between features relating to different subject-matters is considered to be disclosed with this application.

However, all features can be combined providing synergetic effects that are more than the simple summation of these features.

While the invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims.

The mere fact that certain measures are recited in mutually different dependent claims does not indicate that a combination of these measures cannot be used to advantage. Any reference signs in the claims should not be considered as limiting the scope.

**Claims**

1. A device (100) for raw image data compression based on uncertainty measure for a vehicle, the device (100) comprising:

- a data rearranging module (10), which is configured to rearrange a 12-bit depth pattern input data into a 12-bit depth pattern rearranged data of YUV420 format comprising

   i) at least one Y-channel containing green, red and blue components of the 12-bit depth pattern input data and,
   ii) at least one U-channel and at least one V-channel containing at least one blank image filled with zeros;
   iii) wherein a resolution of the at least one Y-channel corresponds to a resolution of the 12-bit depth pattern input data, and the at least one U and V channels corresponds to a half resolution of 12-bit depth pattern input data;

   - a data splitting module (20), which is configured to split the 12-bit depth pattern rearranged data into a n-bit depth pattern least significant bits, LSB, data and a (12-n)-bit depth pattern most significant bits, MSB, data, wherein the n-bit depth pattern LSB data comprises lowest n-bit of the 12-bit depth pattern rearranged data, wherein the (12-n)-bit depth pattern MSB data comprises highest (12-n)-bit of the 12-bit depth pattern rearranged data, wherein n is either 4 or 6 or 8 or 10; and
   - an encoding module (30), which is configured to determine an entropy value of the 12-bit depth pattern input data and to encode the n-bit depth pattern MSB data stream alone, if the determined entropy value is higher than an entropy threshold value.

2. The device (100) according to claim 1, wherein the encoding module (30) is configured to encode the n-bit depth pattern combined MSB and LSB data stream if the determined entropy value is lower than or equal to an entropy threshold value.

3. The device (100) according to claim 1 or 2, wherein the encoding module (30) is configured to determine the entropy value of the 12-bit depth pattern input data by determining a statistical measure of randomness of a texture of the 12-bit depth pattern input data.

4. The device (100) according to any one of the preceding claims, wherein the encoding module (30) is configured to determine the entropy value of the 12-bit depth pattern input data based on:

$$-\text{sum } (p*\log(p)),$$

where p contains the normalized histogram counts computed from the histogram of the image.

5. The device (100) according to claim 4, wherein the encoding module (30) is configured to determine the entropy value of the 12-bit depth pattern input data based on determining a correlation level among the neighbour pixels of the 12-bit depth pattern input data.

6. The device (100) according to any one of the preceding claims, wherein the encoding module (30) is configured to determine the entropy value of the 12-bit depth pattern input data based on determining a contrast correlation level among the neighbour pixels of the 12-bit depth input data.

7. The device (100) according to any one of the preceding claims, wherein the device is configured to support HEVC video codec standard in lossless mode.

8. A method for raw image data compression based on uncertainty measure for a vehicle, the method comprising the following steps of:

   - Rearranging (S1) a 12-bit depth pattern input data into a 12-bit depth pattern rearranged data by means of a data rearranging module (10), the 12-bit depth pattern rearranged data of YUV420 format comprising

      i) at least one Y-channel containing green, red and blue components of the 12-bit depth pattern input data and,
      ii) at least one U-channel and at least one V-channel both containing at least one blank image filled with zeros;
      iii) wherein a resolution of the at least one Y-channel corresponds to a resolution of the 12-bit depth pattern input data and at least one U and V channels corresponds to a half resolution of 12-bit depth pattern input data;

   - Splitting (S2) the 12-bit depth pattern rearranged data into a n-bit depth pattern least significant bits, LSB, data and a (12-n)-bit depth pattern most significant bits, MSB, data by means of a data splitting module (20), wherein the n-bit depth pattern LSB data comprises lowest n-bit of the 12-bit depth pattern rearranged data, wherein the (12-n)-bit depth pattern MSB data comprises highest (12-n)-bit of the 12-bit depth pattern rearranged data, wherein n is either 4 or 6 or 8 or 10; and
   - Determining (S3) an entropy value of the 12-bit depth pattern input data and encoding the (12-n)-bit depth pattern MSB data stream along and LSB data is packed tightly in n-bit container without zeros, if the determined entropy value is higher than an entropy threshold value.

9.  The method according to claim 8,
    wherein the method further comprises the steps of:

    - Encoding the n-bit depth pattern of combined MSB data and LSB data if the determined entropy value is lower than or equal to an entropy threshold value.

10. The method according to claim 8 or to claim 9, wherein the method further comprises the steps of:

    - Determining the entropy value of the 12-bit depth pattern input data by means of determining a statistical measure of randomness of a texture of the 12-bit depth pattern input data.

Fig. 1

Fig. 2

| G1 | R1 | G3 | R2 | G5 | R3 | G7 | R4 | |
| B1 | G2 | B2 | G4 | B3 | G6 | B4 | G8 | Bayer |
| G9 | R5 | G11 | R6 | G13 | R7 | G15 | R8 | |
| B5 | G10 | B6 | G12 | B7 | G14 | B8 | G16 | |

## Fig. 3

| G1 | G5 | G2 | G6 | G3 | G7 | G4 | G8 | |
| G9 | G13 | G10 | G14 | G11 | G15 | G12 | G16 | Y Channel |
| R1 | R2 | R3 | R4 | B1 | B2 | B3 | B4 | |
| R5 | R6 | R7 | R8 | B5 | B6 | B7 | B8 | |
| 0 | 0 | 0 | 0 | 0 | 0 | 0 | 0 | U Channel |
| 0 | 0 | 0 | 0 | 0 | 0 | 0 | 0 | V Channel |

## Fig. 4

| G1MSB | G2MSB | G3MSB | G4MSB | G5MSB | G6MSB | G7MSB | G8MSB | | |
| G9MSB | G10MSB | G11MSB | G12MSB | G13MSB | G14MSB | G15MSB | G16MSB | MSB | Y Channel |
| R1MSB | R2MSB | R3MSB | R4MSB | B1MSB | B2MSB | B3MSB | B4MSB | | |
| R5MSB | R6MSB | R7MSB | R8MSB | B5MSB | B6MSB | B7MSB | B8MSB | | |
| 0 | 0 | 0 | 0 | 0 | 0 | 0 | 0 | MSB | U Channel |
| 0 | 0 | 0 | 0 | 0 | 0 | 0 | 0 | MSB | V Channel |

## Fig. 5

| G1LSB | G2LSB | G3LSB | G4LSB | G5LSB | G6LSB | G7LSB | G8LSB | | |
| G9LSB | G10LSB | G11LSB | G12LSB | G13LSB | G14LSB | G15LSB | G16LSB | LSB | Y Channel |
| R1LSB | R2LSB | R3LSB | R4LSB | B1LSB | B2LSB | B3LSB | B4LSB | | |
| R5LSB | R6LSB | R7LSB | R8LSB | B5LSB | B6LSB | B7LSB | B8LSB | | |
| 0 | 0 | 0 | 0 | 0 | 0 | 0 | 0 | LSB | U Channel |
| 0 | 0 | 0 | 0 | 0 | 0 | 0 | 0 | LSB | V Channel |

## Fig. 6

| | | | | | | | | | |
|---|---|---|---|---|---|---|---|---|---|
| G1MSB | G2MSB | G3MSB | G4MSB | G5MSB | G6MSB | G7MSB | G8MSB | MSB | Y Channel |
| G9MSB | G10MSB | G11MSB | G12MSB | G13MSB | G14MSB | G15MSB | G16MSB | | |
| R1MSB | R2MSB | R3MSB | R4MSB | B1MSB | B2MSB | B3MSB | B4MSB | | |
| R5MSB | R6MSB | R7MSB | R8MSB | B5MSB | B6MSB | B7MSB | B8MSB | | |
| G1LSB | G2LSB | G3LSB | G4LSB | G5LSB | G6LSB | G7LSB | G8LSB | LSB | |
| G9LSB | G10LSB | G11LSB | G12LSB | G13LSB | G14LSB | G15LSB | G16LSB | | |
| R1LSB | R2LSB | R3LSB | R4LSB | B1LSB | B2LSB | B3LSB | B4LSB | | |
| R5LSB | R6LSB | R7LSB | R8LSB | B5LSB | B6LSB | B7LSB | B8LSB | | |
| 0 | 0 | 0 | 0 | 0 | 0 | 0 | 0 | MSB | U Channel |
| 0 | 0 | 0 | 0 | 0 | 0 | 0 | 0 | LSB | |
| 0 | 0 | 0 | 0 | 0 | 0 | 0 | 0 | MSB | V Channel |
| 0 | 0 | 0 | 0 | 0 | 0 | 0 | 0 | LSB | |

# Fig. 7

# Fig. 8

Fig. 9

Fig. 10

## Fig. 11

## Fig. 12

| Bit Stream | Percentage (%) Reduction in file Size | | | Encoding performance (FPS) | | |
|---|---|---|---|---|---|---|
| | Approach-1 | Approach-2 | Approach-3 | Approach-1 | Approach-2 | Approach-3 |
| Combined (8-Bit) | 53.39 % | 59.08 % | 61.55 % | 31.55 | 31.27 | 32.45 |

# Fig. 13

| Name | Entropy | Percentage (%) Reduction in file Size | | Encoding performance (FPS) | |
|---|---|---|---|---|---|
| | | Combined Stream | MSB Stream | Combined Stream | MSB Stream |
| File-1 | High (>3) | 31.096 % | 37.125% | 23.28 | 51.25 |
| File-2 | Low (<3) | 61.557 % | 47.910 % | 32.45 | 68.16 |

# Fig. 14

Europäisches
Patentamt

European
Patent Office

Office européen
des brevets

# EUROPEAN SEARCH REPORT

Application Number

EP 18 20 5771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | G MOHANBABU ET AL: "PERFORMANCE ANALYSIS OF LOSSLESS COMPRESSION SCHEMES FOR BAYER PATTERN COLOR IMAGE VIDEO SEQUENCES", INTERNATIONAL JOURNAL OF COMPUTER SCIENCE & EMERGING TECHNOLOGIES (IJCSET), vol. 1, no. 2, 1 August 2010 (2010-08-01), pages 62-66, XP055471733, * abstract * * sections 1-3 * * figures 1-3 * | 1-10 | INV. H04N19/30 H04N19/136 G06T3/40 H04N21/2343 |
| A | DOUTRE C ET AL: "A Fast Demosaicking Method Directly Producing YCbCr 4:2:0 Output", IEEE TRANSACTIONS ON CONSUMER ELECTRONICS, IEEE SERVICE CENTER, NEW YORK, NY, US, vol. 53, no. 2, 1 May 2007 (2007-05-01), pages 499-505, XP011381808, ISSN: 0098-3063, DOI: 10.1109/TCE.2007.381721 * abstract * * section 1 * * figures 1-2 * | 1-10 | |
| A | BELYAEV EVGENY ET AL: "High bit depth infrared image compression via low bit depth codecs", PROCEEDINGS OPTICAL DIAGNOSTICS OF LIVING CELLS II, SPIE, US, vol. 10403, 30 August 2017 (2017-08-30), pages 104030A-104030A, XP060095279, ISSN: 0277-786X, DOI: 10.1117/12.2275542 ISBN: 978-1-5106-1723-0 * abstract * * sections 1-2 * * figure 1 * | 1-10 | TECHNICAL FIELDS SEARCHED (IPC) H04N G06T |

-/--

The present search report has been drawn up for all claims

| Place of search | Date of completion of the search | Examiner |
|---|---|---|
| The Hague | 29 January 2019 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 18 20 5771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/217704 A1 (ZENG ZHIFANG [CN] ET AL) 20 September 2007 (2007-09-20) <br> * abstract * <br> * figures 1, 2A, 2B * <br> * paragraphs [0009] - [0015], [0132] - [0142] * | 1-10 | |
| A | WO 02/071622 A2 (KONINKL PHILIPS ELECTRONICS NV [NL]; VAN DER VLEUTEN RENATUS J [NL]) 12 September 2002 (2002-09-12) <br> * abstract * <br> * page 2, line 26 - page 3, line 17 * <br> * page 4, line 16 - page 6, line 10 * | 1-10 | |
| A | VISWANATH PRASHANTH ET AL: "A Diverse Low Cost High Performance Platform for Advanced Driver Assistance System (ADAS) Applications", <br> 2016 IEEE CONFERENCE ON COMPUTER VISION AND PATTERN RECOGNITION WORKSHOPS (CVPRW), IEEE, <br> 26 June 2016 (2016-06-26), pages 819-827, XP033027903, <br> DOI: 10.1109/CVPRW.2016.107 <br> * abstract * <br> * sections 3-4 * <br> * figure 16 * | 1-10 | |
| A | US 2007/153013 A1 (WELLS AARON G [US] ET AL) 5 July 2007 (2007-07-05) <br> * abstract * <br> * paragraphs [0021] - [0022], [0027] - [0028], [0034] - [0035] * <br> * figure 4 * | 1-10 | |

TECHNICAL FIELDS
SEARCHED      (IPC)

The present search report has been drawn up for all claims

| Place of search | Date of completion of the search | Examiner |
|---|---|---|
| The Hague | 29 January 2019 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 18 20 5771

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2019

| Patent document cited in search report | | Publication date | Patent family member(s) | | Publication date |
|---|---|---|---|---|---|
| US 2007217704 | A1 | 20-09-2007 | JP | 4434155 B2 | 17-03-2010 |
| | | | JP | 2007214813 A | 23-08-2007 |
| | | | US | 2007217704 A1 | 20-09-2007 |
| WO 02071622 | A2 | 12-09-2002 | CN | 1457551 A | 19-11-2003 |
| | | | EP | 1368898 A2 | 10-12-2003 |
| | | | JP | 4037271 B2 | 23-01-2008 |
| | | | JP | 2004531924 A | 14-10-2004 |
| | | | KR | 20030005319 A | 17-01-2003 |
| | | | US | 2003179938 A1 | 25-09-2003 |
| | | | WO | 02071622 A2 | 12-09-2002 |
| US 2007153013 | A1 | 05-07-2007 | CN | 1997155 A | 11-07-2007 |
| | | | US | 2007153013 A1 | 05-07-2007 |

EPO FORM P0459

For more details about this annex : see Official Journal of the European Patent Office, No. 12/82